# EUROPEAN PATENT SPECIFICATION

(11) **EP 1 674 543 B1**
(45) Date of publication and mention of the grant of the patent: **17.08.2011**
(21) Application number: 05028071.8
(22) Date of filing: 21.12.2005
(51) Int. Cl.: C09J 7/02

(54) **Heat-sensitive adhesive material**
Wärmeempfindliches Klebematerial
Matériau adhésif sensible à la chaleur

(30) Priority: 22.12.2004 JP 2004370445
(43) Date of publication of application: 28.06.2006
(73) Proprietor: Ricoh Company, Ltd., Tokyo 143-8555 (JP)
(72) Inventor: Kugo, Tomoyuki, Ohta-ku Tokyo 143-8555 (JP); Kitano, Tohru, Ohta-ku Tokyo 143-8555 (JP); Inaba, Norihiko, Ohta-ku Tokyo 143-8555 (JP)
(74) Representative: Barz, Peter

(56) References cited:
- EP-A- 1 168 282
- GB-A- 1 209 431
- US-A1- 2003 235 672
- DATABASE WPI Section Ch, Week 199713 Derwent Publications Ltd., London, GB; Class G05, AN 1997-140319 XP002366755 & JP 09 020079 A (RICOH KK) 21 January 1997 (1997-01-21)

## Description

### BACKGROUND OF THE INVENTION

### Field of the Invention

The present invention relates to a heat-sensitive adhesive material comprising a heat-sensitive adhesive layer that is not adhesive at ordinary temperature but develops adhesion at higher temperature, where the developed adhesion is maintained after its development thereof.

### Description of the Related Art

Recently, pressure-sensitive adhesive sheets have been widely used for, for example, price labels, product (bar-code) labels, quality labels, labels for displaying weights and labels for advertisement (stickers). In addition, methods for recording labels vary from ink-jet recording method, thermal recording method to pressure-sensitive recording method. A typical pressure-sensitive adhesive sheet which comprises an adhesive layer and release paper laminated on the opposite side of an information recording surface has been widely used by virtue of its simple operation that the sheet may be pasted only by pressurizing after peeling off the release paper. However, the release paper is seldom recovered and reused; in most cases, it is discarded. Also, what is termed an adhesive layer has tackiness, and handling of the sheet is very difficult after peeling of the release paper. It has been a problem that an adhesive sheet is curled, wrinkled, or in worst cases torn when the improperly placed sheet is being removed from the adherend surface. In recent years, a heat-sensitive adhesive sheet which shows no adherence at ordinary temperature and requires no release paper has drawn attention.

Regarding recording labels free of release paper, recording labels that employ heat-sensitive adhesive layer are disclosed in Japan Patent Application Laid-Open (JP-A) No. S63-303387 and Japan Examined Utility Model Application Publication (JP-Y) No. H05-11573. These recording labels with heat-sensitive adhesive layer require thermal activation of the heat-sensitive adhesive layer. Regarding the methods of the thermal activation, JP-Y No. H05-11573 discloses a method with heated air or infrared light; JP-A No. H05-127598 discloses a method with electrical heater or dielectric coil; JP-A No. H07-121108 discloses a method with xenon flash; and JP-A No. H07-164750 discloses a method with halogen lamp.

Furthermore, there is a known method of thermal activation by contacting a heat-sensitive adhesive layer with a heating means or a heat-transfer medium heated by a heating means. For example, JP-A No. S57-37534 discloses a method to contact a heat-sensitive adhesive layer with a belt as a heat transfer medium heated by thermal heater as a heating means; JP-A No. S60-45132 discloses a method to contact with a heating drum as a heating means; and JP-A No. H06-263128 discloses a method to contact with a heating roll as a heating means.

It is difficult to provide effective heating to a heat-sensitive adhesive layer when the heat-sensitive adhesive layer is thermally activated by electrical heater or halogen lamp. Overheating compromises the safety, and ineffective use of thermal energy causes high energy cost. It is possible to wrap the heated portion with a cover for the sake of safety and cost, which sacrifices the compactness of the apparatus as a whole.

When a heat-sensitive adhesive layer is thermally activated by contacting it with a heating means such as heating drum and heating roll and a heat transfer medium such as belt heated by a heating means, a heating means has to stand by with the heating medium being heated for prompt thermal activation, which is a problem in terms of safety. Also, there are occasions in which a heat-sensitive adhesive layer spread to heating means or heat-transfer medium during thermal activation, which causes the recording label to twine around the heating means.

The above-mentioned thermal activation methods are disadvantageous in terms of heat sensitivity for recording labels comprising a heat-sensitive coloring layer because the heat-sensitive coloring layer easily develops color affected by the heat from thermal activation, and the heat sensitivity of the layer must be improved.

In addition, JP-A No. H07-258613 discloses a method to thermally activate a heat-sensitive adhesive layer by pressing a heating means against the substrate of a recording label. This may prevent the heat-sensitive adhesive layer from transferring to the heating means and the recording label from twining around the heating means. However, the efficiency of thermal activation and operation efficiency of labeling by thermally activating heat-sensitive adhesive layers are lowered because the amount of thermal energy wasted without being used for the thermal activation of the heat-sensitive adhesive layer increases and the heat-sensitive adhesive layer is not thermally activated rapidly. As described above, safety, electrical power saving, downsizing of printers are demanded; therefore, an activation means with thermal head as a thermal activation method is disclosed in patent literatures such as JP-A No. H11-79152, JP-A No. H11-65451, JP-A No. H10-35126, JP-A No. H11-157141, JP-A No H11-311945, JP-A No. 2001-303036, JP-A No. 2001-48139 and JP-A No. 2003-316265. The safety and the compactness of the apparatus have been improved by reducing the amount of energy consumption with thermal head as a heating means.

Especially, JP-A 2003-316265 discloses a process that comprises printing by thermal head on a heat-sensitive coloring layer, guillotine cutting by a vertical pair of stationary and moving blades and thermal activation of a heat-sensitive adhesive layer with a thermal head; and an apparatus that relaxes and cuts a heat-sensitive adhesive material and that inserts the cut heat-sensitive adhesive label between the activating thermal head and a platen roll. However, the apparatus has not yet been in practical use because of the following poor delivery of the heat-sensitive adhesive materials and other defects:
(1) Cutting defect by paper jamming between the sides of the top and bottom blades in the cutter portion,
(2) Insertion defect to the activation portion due to an inappropriately relaxed heat-sensitive adhesive material between the cutting portion and the activation portion, and
(3) Delivery and insertion defects at the contact of the heat-sensitive adhesive layer to the guide plate next to the activating portion and the pull-in roller.

Furthermore, JP-A No. H09-20079 discloses a heat-sensitive adhesive material that is aimed to improve the adhesive properties to an adherend by providing a pressure-sensitive adhesive layer and a heat-sensitive adhesive layer on a support. However, the problem of the delivery defects (3) deteriorates due to the increased friction coefficient of the surface of the heat-sensitive adhesive layer placed on top of the pressure-sensitive adhesive layer. Also, the installation of a pressure-sensitive adhesive layer over the substrate disturbs the orientation of the support, likely resulting in reduced paper stiffness. The reduction in paper stiffness causes the paper jamming at the side of the top and bottom blades (1), resulting in more frequent cutting defects. In addition, the appropriate relaxing of the heat-sensitive adhesive material between the cutting portion and the activating portion (2) is not attained, causing the increase in the defects in inserting to the activating portion. Under the present situation, the above-mentioned difficulties remain unsolved.

### SUMMARY OF THE INVENTION

The object of the present invention is to provide a heat-sensitive adhesive material having improved delivery properties and a superior adhesive strength.

The inventor of the present invention made various studies on heat-sensitive adhesive materials and reached a solution with the methods described below:

[1] a heat-sensitive adhesive material, having Clark stiffness set by JIS P-8143 of 30 m³/100 to 180 cm³/100 in a longitudinal direction and a coefficient of static friction between a heat-sensitive layer and a polyethylene terephthalate (PET) film of 0.90 or less, and preferably 0.30 to 0.90, wherein an adhesive layer comprising mainly an adhesive is coated over a support of the heat-sensitive adhesive material and a heat-sensitive adhesive layer having developed adhesion by heating and maintaining the developed adhesive strength is coated over the adhesive layer.

Regarding the heat-sensitive adhesive material, excessively small Clark stiffness reduces the stiffness of the paper, resulting in a frequent occurrence of the cutting defect mentioned above as (1). When the Clark stiffness is too large, the occurrence of cutting defect is suppressed while it may not be able to provide JP 09 020079 A discloses according to its abstract a heat-sensitive recording material which has a heat-sensitive colouring layer composed of colourless or light-coloured leuco dye and a developer on the surface of the support and a pressure-sensitive adhesive layer and a barrier layer showing adhesion on activation by light or heat, in that order, on the reverse side of the support. The barrier layer is composed of polymers and a plasticizer which is solid at ordinary temperature and a tackifier.

GB-A-1 209 431 discloses a weftless tape comprising a plurality of elongated filaments, a cohesive flexible plastic covering enveloping said filaments from end to end thereof, a first layer of adhesive which is tacky at ambient temperatures on one side of said tape, and a second layer of heat sensitive adhesive in contact with and substantially overlying said first layer, said second layer being non-tacky and heat stable at ambient temperatures and having an adhesion softening temperature at which said covering is heat-stable. Preferably, the first layer comprises an adhesive of natural and synthetic rubber.

US 2003/0235672 A1 discloses an adhesive tape for applying an exposed pressure-sensitive adhesive to a material. The adhesive tape has a heat-activated layer with a pressure-sensitive adhesive (PSA) coating. The heat-activated layer may be heat adhered to a material without damaging the adhesive properties of the PSA. A method of applying PSA to a material includes applying a PSA to a heat-activated adhesive layer, placing the layer against the material; and heating the layer so that the layer adheres to the material thereby fixing the pressure-sensitive adhesive to the material.

None of these documents mentions the Clark stiffness or the coefficient of static friction. appropriate relaxation to the paper, resulting in an insertion defect of the paper to the activation portion. With an excessively large coefficient of static friction, the delivery and insertion defects mentioned in (3) occur frequently when the heat-sensitive adhesive layer is contacting with the guide panel and pull-in roller before the activation portion.

Clark stiffness in the longitudinal direction is preferably between 40 cm³/100 and 120 cm³/100, and more preferably 60 cm³/100 and 90 cm³/100. Here, in the present invention, the longitudinal direction of a heat-sensitive adhesive material means a direction along the fiber of a support.

In addition, the coefficient of static friction is 0.90 or less, and preferably 0.30 to 0.90. The coefficient of static friction is expressed by tan θ of angle 0, which is an average of five measurements of an angle a substrate makes with a horizontal plane and at which a weight is about to slide, wherein the heat-sensitive adhesive material is pasted on the smooth substrate in a longitudinal direction such that the heat-sensitive adhesive layer is the front face, the weight with a width of 5 cm and a length of 7 cm, which weighs 320 g and has a polyethylene terephthalate film attached to its bottom surface, is left at rest on the surface of the heat-sensitive adhesive layer of the heat-sensitive adhesive material, and the substrate is tilted.

Various methods may be given as a preparation method of a heat-sensitive adhesive material of the present invention. First of all, regarding Clark stiffness, the adjustment of the thickness and the basic weight of a support and the adjustment of the thicknesses of an adhesive layer and a heat-sensitive adhesive layer are given. The thickness of the support is preferably between 45 µm and 135 µm, the basic weight of the support is preferably between 40 g/m² and 110 g/m²; the thickness of the heat-sensitive adhesive layer is between 5 µm and 25 µm. The thickness of the adhesive layer significantly affects the Clark stiffness property, therefore, its adjustment is described in detail in [2] below. On the other hand, the coefficients of static friction of the heat-sensitive adhesive layer and a polyethylene terephthalate (PET) film may be engineered by the adjustment of the thicknesses of the adhesive layer and the heat-sensitive adhesive layer and by the adjustment of the composition of the material for the heat-sensitive adhesive layer. The range for the thickness of the heat-sensitive adhesive layer is, as mentioned above, between 5 µm and 25 µm; the thickness of the adhesive layer also significantly affects the static friction coefficient properties, and it is separately mentioned in [2] below. Furthermore, regarding the component ratio of the materials in the heat-sensitive adhesive layer, the heat-sensitive adhesive layer is, in general, comprised of a thermoplastic resin, solid plasticizer and a tackifier. The ratio is 100 parts to 400 parts of the solid plasticizer to 100 parts of the thermoplastic resin.

[2] The thickness of the adhesive layer is 5 µm to 30 µm.

When the thickness of the adhesive layer is less than 5 µm, the following problems disappear: (1) cutting defect by paper jamming between the sides of the top and bottom blades in the cutter portion, (2) insertion defect to the activation portion due to the inappropriately relaxed heat-sensitive adhesive material between the cutting portion and the activation portion, and (3) delivery and insertion defects during the contact of the heat-sensitive adhesive layer to the guide plate next to the activating portion and the pull-in roller. However, the material develops less adhesion, which is the primary property of the heat-sensitive adhesive material. Strong adhesion may be obtained from an adherend with mirror surface such as SUS plate, polyethylene plate and food wrap, but sufficient adhesion may not easily develop on an adherend with rough surface such as cardboard. Clark stiffness tends to decrease with the thickness of the adhesive layer of over 30 µm, and the defects (1), (2) and (3) occur more frequently. In addition, the bond tends to be squeezed out when the material is rolled and stored under a condition of high temperature and humidity.

[3] The heat-sensitive adhesive material according to any one of [1] to [2], wherein a heat-sensitive recording layer is comprised on the opposite side of the heat-sensitive adhesive layer which is applied over the supporting medium.
JP-A No. 2003-316265 discloses a printer mechanism in which a printing, cutting and activating units are arranged in this order, and the present invention may utilize this printer mechanism.

[4] The heat-sensitive adhesive material according to any one of [1] to [3], wherein the heat-sensitive adhesive material is in the form of a roll.
By rolling the heat-sensitive adhesive layer, the heat-sensitive adhesive material may be stored in a printer in the form of a roll, which may facilitate the compactification of the printer.

[5] The heat-sensitive adhesive material according to [4], wherein the heat-sensitive adhesive material in the form of a roll is coreless.

It is recognized as a defect to keep the heat-sensitive adhesive material in the form of a roll with a paper core necessary to maintain the roll of the heat-sensitive adhesive material and that the paper core becomes a waste in the end. The present invention has made an improvement in this regard.

[6] The heat-sensitive adhesive material according to any one of [4] and [5], wherein the at least a portion of the outer edge of the heat-sensitive adhesive material in the form of a roll is thermally activated as a tack to the roll.

It is recognized as a defect to make the heat-sensitive adhesive material in the form of a roll that a tack to hold the outer end of the roll of the heat-sensitive adhesive material is needed and that the tack becomes a waste when the roll is being used. The present invention has made an improvement in this regard, which is achieved by thermally activating a part of the heat-sensitive adhesive material to tack the outer end of the roll.

### BRIEF DESCRIPTION OF THE DRAWINGS

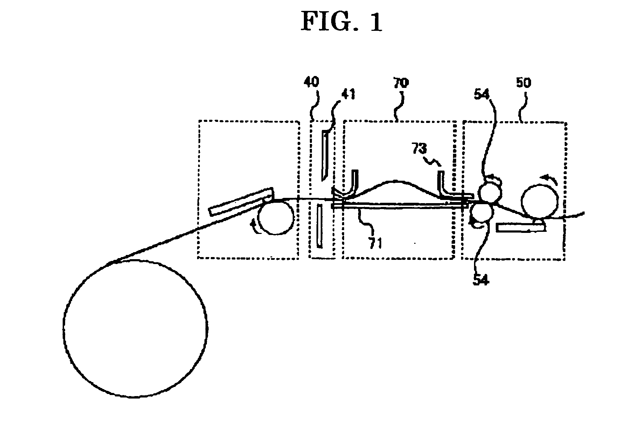

FIG. 1 shows an exemplary configuration of a printer for a heat-sensitive adhesive sheet.

### DESCRIPTION OF THE PREFERRED EMBODIMENTS

The composition of materials for the heat-sensitive adhesive material relating to the present invention is listed hereinafter.

First, a heat-sensitive adhesive layer is described. The heat-sensitive adhesive layer in general comprises a thermoplastic resin, a solid plasticizer and a tackifier.

Examples of the thermoplastic resin used for the heat-sensitive adhesive layer include a resin such as (meth)acrylic acid ester copolymer, styrene-isoprene copolymer, styrene-acrylic acid ester copolymer, styrene-butadiene copolymer, acrylonitrile-butadiene copolymer, ethylene-vinyl acetate copolymer, vinyl acetate-acrylic acid ester copolymer, ethylene-vinyl chloride copolymer, ethylene-acrylic acid ester copolymer, vinyl acetate-ethylene-vinyl chloride copolymer, vinyl acetate-ethylene-acrylic acid ester copolymer, vinyl acetate-ethylene-styrene copolymer, polybutadiene, and polyurethane. Among these, copolymers comprising acrylic acid ester as a monomer component are preferably used in terms of adhesive properties and weather resistance. These may be used individually or in combination.

Examples of a solid plasticizer used for the heat-sensitive adhesive layer of the present invention include dicyclohexyl phthalate (melting point, hereinafter referred to as m.p.: 65 °C), diphenyl phthalate (m.p.: 73 °C), N-cyclohexyl-p-toluenesulfonamide (m.p.: 86 °C), sucrose benzoate (m.p.: 98 °C), (ethylene glycol)dibenzoate (m.p.: 70°C), trimethylolethane tribenzoate (m.p.: 73 °C), pentaerythritol tetrabenzoate (m.p.: 95 °C), sucrose octaacetate (m.p.: 89 °C), and catechol dibenzoate (m.p.: 86 °C); hindered phenol compounds such as triethylene glycol bis[3-(3-t-butyl-4-hydroxy-5-methylphenyl)propionate (m.p.: 77 °C), and 1,6-hexanediol bis[3-(3,5-di-t-butyl-4-hydroxyphenyl)propionate] (m.p.: 103 °C); triazole compounds such as 2-[5'-(1",1",3",3"-tetramethylbutyl)-2'-hydroxyphenyl]benzotriazole (m.p.: 103 °C), 2-[3',5'-di-(2",2"-dimethylpropyl)-2'-hydroxyphenyl]benzotriazole (m.p.: 80 °C), 2-(3'-t-butyl-5'-methyl-2'- hydroxyphenyl)-5-chlorobenzotriazole (m.p.: 138 °C), 2-(3,5-di-t-butyl-2-hydroxyphenyl)-5-chlorobenzotriazole (m.p.: 155 °C), 2-(5-methyl-2-hydroxyphenyl)benzotriazole (m.p.: 130 °C), and 2-(3,5-di-t-amyl-2-hydroxyphenyl)benzotriazole (m.p.: 80 °C); and phosphate compounds. These compounds may be used in combination to maintain the amorphous condition after melting of the heat-sensitive adhesive layer and to prolong the duration of the adhesive strength. These solid plasticizers and compounds are refined by means of wet or dry grinders such as ball mill, sand mill, paint shaker, Dino mill, Atritor and Henschel mixer and used in the form of an aqueous dispersion; they may alternatively be microencapsulated by conventionally known methods. The particle diameter of the solid plasticizer is preferably 10 µm or less, more preferably 5 µm or less, and practically 0.7 µm to 3 µm.

Specific examples of the tackifier used for a heat-sensitive adhesive layer of the present invention include a terpene resin, an aliphatic petroleum resin, an aromatic petroleum resin, a coumarone-indene resin, a styrene resin, a phenol resin, a terpene phenol resin and a rosin-derivative resin. The preferable ratio is 30 parts to 120 parts of the tackifier to 100 parts of the thermoplastic resin.

The heat-sensitive adhesive layer may include a filler to the extent that it does not interfere the object of the present invention. Examples of the filler include inorganic materials including carbonates, oxides, hydroxides and sulfates of aluminum, zinc, calcium, magnesium, barium and titanium, and clays such as crude silica, zeolite, kaolin and calcined kaolin; starches, a styrene resin, a polyolefin resin, a melamine resin, an acrylic resin, paraffin, a crude wax and a synthetic wax.

Other than the thermoplastic resin and the solid plasticizer, the heat-sensitive adhesive layer may comprise a supercooling accelerator, which promotes the supercooling condition of the solid plasticizer and develops high adhesive strength even at a low temperature. Examples of the supercooling accelerator include naphthol derivatives such as 2-benzyloxynaphthalene; biphenyl derivatives such as methaterphenyl, acetylbiphenyl, p-benzylbiphenyl and 4-allyloxybiphenyl; polyether compounds such as 1,2-bis(3-methylphenoxy)ethane, 2,2'-bis(4-methoxyphenoxy)diethylether and bis(4-methoxyphenyl)ether; derivatives of diester carbonates or oxalates such as diphenyl carbonate, dibenzyl oxalate, di-(p-chlorobenzyl)oxalate and di-(p-methylbenzyl)oxalate. Among these, dibenzyl oxalate derivative and biphenyl derivative are effective in accelerating the supercooling of the solid plasticizer.

The heat-sensitive adhesive layer may optionally comprise additives such as hardener, antiseptic agent, dye, ultraviolet absorber, antioxidant, pH adjustor and antifoamer.

An adhesive resin used for the adhesive layer between the heat-sensitive adhesive layer and support is "glue" which is made of a material sticky at an ordinary temperature. The material preferably has a low glass transition point of - 10 °C or below. Examples include (meth)acrylate copolymer, styrene-isoprene copolymer, styrene-acrylate copolymer, styrene-butadiene copolymer, acrylonitrile-butadiene copolymer, vinyl acetate-acrylate copolymer, ethylene-vinyl acetate copolymer and vinyl acetate-ethylene-acrylate copolymer. Among these, (meth)acrylate copolymer is preferable as the adhesive resin.

Hollow particles with insulating properties may optionally be used for the adhesive layer of the present invention; polymeric compounds such as acrylic polymer and vinylidene chloride polymer are used. Also, spherical particles, mainly polymethylmethacrylate, are used.

The content of the hollow particle in the adhesive layer is preferably 3 % by mass to 25 % by mass.

A heat-sensitive recording layer may be installed on the opposite side of the support on which the heat-sensitive adhesive layer is applied.

The content of a coloring agent is preferably 0.30 g/m² to 1.00 g/m². Examples of the coloring agent include a triarylmethane compound, a diarylmethane compound, a xanthene compound, a thiazine compound, a spiropyran compound, a diphenylmethane dye, a spiro dye, a lactam dye and a fluorane dye.

More specifically, examples of a triarylmethane dye include 3,3-bis(p-dimethylamonophenyl)-6-dimethylaminophthalide (Crystal Violet Lactone), 3,3-bis(p-dimethylamonophenyl)phthalide, 3-(p-dimethylaminophenyl)-3-(1,2-dimethylindole-3-yl)phthalide, 3-(p-dimethylaminophenyl)-3-(2-methylindole-3-yl)phthalide, 3,3-bis(1,2-dimethylindole-3-yl)-5-dimethylaminophthalide, 3,3-bis(9-ethylcarbazole-3-yl)-6-dimethylaminophthalide, 3,3-bis(2-phenylindole-3-yl)-6-dimethylamiophthalide, 3-p-dimethylaminophenyl-3-(1-methylpyrrole-3-yl)-6-dimethylaminophthalide, 3-p-dimethylaminophenyl-3-(1-methylpyrrole-2-yl)-6-dimethylaminophthalide, 3-(p-dimethylaminophenyl)-3-(2-methylindole-3-yl)phthalide, 3-(p-dimethylaminophenyl)-3-(2-phenylindole-3-yl)phthalide, 3,3-bis(1,2-dimethylindole-3-yl)-5-dimethylaminophthalide, 3,3-bis(1,2-dimethylindole-3-yl)-6-dimethylaminophthalide, 3,3-bis(9-ethylcarbazole-3-yl)-5-dimethylaminophthalide and 3,3-bis(2-phenylindole-3-yl)-5-dimethylaminophthalide.

Examples of a diphenylmethane dye include 4,4'-bis-dimethylaminophenylbenzhydrylbenzyl ether, 4,4'-bis-dimethylaminobenzhydrylbenzyl ether, N-halophenyl-leucoauramine and N-2,4,5-trichlorophenyl-leucoauramine.

Examples of a thiazine dye include benzoyl leucomethylene blue and p-nitrobenzoyl leucomethylene blue.

Examples of a spiro dye include 3-methyl-spiro-dinaphtopyran, 3-ethyl-spiro-dinaphtopyran, 3,3'-dichlorospirodinaphtopyran, 3-phenyl-spiro-dinaphtopyran, 3-benzyl-spiro-dinaphtopyran, 3-propylspirobenzopyran, 3-methylnaphto-(3-methoxybenzo)spiropyran, 3-methyl-naphto(6'-methoxybenzo)spiropyran and 3-propyl-spiro-dibenzopyran.

Examples of a lactam dye include Rhodamine B anilinolactam, Rhodamine B-p-chloroanilinolactam, Rhodamine(p-nitroanilino)lactam and Rhodamene(o-chloroanilino)lactam.

Examples of a fluorane dyes include 3-diethylamino-7-dibenzylaminofluorane, 3-dimethylamino-7-dibenzylaminofluorane, 3-diethylamino-7-octylaminofluorane, 3-diethylamino-7-phenylfluorane, 3-dimethylamino-7-methoxyfluorane, 3-diethylamino-7-N-diethylaminoffuorane, 3-diethylamino-7-methoxyfluorane, 3-diethylamino-6-methoxyfluorane, 3-diethylamino-6-methyl-7-chlorofluorane, 3-diethylamino-7-chlorofluorane, 3-diethylamino-6-chloro-7-methylfluorane, 3-diethylamino-7-(3,4-dichloroanilino)fluorane,
3-diethylamino-7-(2-chloroanilino)fluorane, 3-diethylamino-6-methyl-7-anilinofluorane, 3-diethylamino-6-methyl-7-phenylaminoffuorane, 3-diethylamino-6,7-dimethylfluorane, 3-(N-ethyl-N-tolyl)amino-6-methyl-7-anilinofluorane, 3-piperidino-6-methyl-7-anilinofluorane, 3-(N-ethyl-N-tolyl)amino-6-methyl-7-phenethylfluorane, 3-diethylamino-7-(4-nitroanilino)fluorane, 3-dibutylamino-6-methyl-7-anilinofluorane, 3-(N-methyl-N-propyl)amino-6-methyl-7-anilinofluorane, 3-(N-ethyl-p-toluidino)-7-methylfluorane, 3-(N-ethyl-p-toluidino)-6-methyl-7-phenylaminofluorane, 3-(N-ethyl-p-toluidino)-6-methyl-7-(p-toluidino)fluorane, 3-diethylamino-7-(2-carbomethoxy-phenylamino)fluorane, 3-diethylamino-7-N-acetyl-N-methylaminofluorane, 3-(N-ethyl-N-isoamyl)amino-6-methyl-7-anilinofluorane, 3-diethylamino-7-N-chloroethyl-N-methylaminofluorane, 3-diethylamino-7-methyl-N-benzylaminofluorane, 3-diethylamino-7-N-methylaminofluorane, 3-(N-methyl-N-cyclohexyl)amino-6-methyl-7-anilinofluorane, 3-(N-ethyl-N-iso-amylamino)-6-methyl-7-phenylaminofluorane, 3-(N-cyclohexyl-N-methylamino)-6-methyl-7-phenylaminofluorane, 3-N-ethyl-N-tetrahydrofuryl)amino-6-methyl-7-anilinofluorane, 3-piperidino-6-methyl-7-phenylaminofluorane, 3-pyrrolidino-6-methyl-7-phenylaminofluorane, 3-diethylamino-6-methyl-7-xylidinofluorane, 3-diethylamino-7-(o-chlorophenylamino)fluorane, 3-dibutylamino-7-(o-chlorophenylamino)fluorane and 3-pyrrolidino-6-methyl-7-p-butylphenylaminofluorane.

An electron-accepting material which is generally used for thermal recording paper may be used as a color developer for the heat-sensitive recording layer. The content of the color developer is preferably 0.90 g/m² to 3.00 g/m². Specific examples include phenol derivatives, aromatic carboxylic acid derivatives or the metal compounds thereof, N,N'-diarylthiourea derivatives, a mixture of organic acids and metal compounds and acidic polymers (for example, a phenol/formaldehyde resin, a salicylic acid resin or their multivalent metal salts with zinc, magnesium, aluminum, calcium, titanium, manganese, tin and nickel). Among these, phenol derivatives, aromatic carboxylic acid derivatives the metal compounds thereof, and N,N'-diarylthiourea derivatives are generally used.

Among these, phenol derivatives, aromatic carboxylic acid and its phenolic compounds are most preferable. Specific examples include phenolic compounds such as 1,1-bis(p-hydroxyphenyl)propane, 2,2-bis(p-hydroxyphenyl)propane, 2,2-bis(p-hydroxyphenyl)butane, 2,2-bis(p-hydroxyphenyl)hexane, bisphenol sulfone, bis(3-aryl-4-hydroxyphenyl)sulfone, 4-hydroxy-4'-isopropyloxydiphenylsulfone, 3,4-dihydroxy-4'methyldiphenylsulfone, diphenolic ether, benzyl p-hydroxybenzoate, propyl p-hydroxybenzoate, butyl p-hydroxybenzoate, p-tert-butylbenzoic acid, trichlorobenzoic acid, octyl 4-hydroxybenzoate, benzoic acid, terephthalic acid, 3-sec-butyl-4-hydroxybenzoic acid, 3-cyclohexyl-4-hydroxybenzoic acid, 3,5-dimethyl-4-hydroxybenzoic acid, salicylic acid, 3-isopropyl salicylate, 3-tert-butyl salicylate, 3-benzyl salicylate, 3-(α-methylbenzyl)salicylate, 3-chloro-5-(α-methylbenzyl),3,5-di-α-methylbenzyl salicylate, 3,5-di-tert-butyl salicylate, 3-phenyl-5-(α, α-dimethylbenzyl) salicylate, 4-tert-butylphenol,4-hydroxydiphenoxyde, α-naphthol, β-naphthol, 4-hydroxyacetophenol, 4-tert-catechol, 2,2'-dihydroxydiphenol, 2,2'-methylenebis(4-methyl-6-tert-isobutylphenol, 4,4'-isopropylidene-bis(2-tert-butylphenol), 4,4'-sec-butylidenediphenol, 4-phenylphenol, 4,4'-isopropylidenediphenol, 2,2'-methylene-bis(4-chlorophenol), hydroquinone, 4,4'-cyclohexylidenediphenol, dimethyl 4-hydroxyphthalate, hydroquinone monobenzyl ether, novolac phenol resins and phenol polymer.

Examples of a binder used for the heat-sensitive recording layer include starches; cellulose derivatives such as hydroxyethylcellulose, methylcellulose, ethylcellulose and carboxylmethylcellulose; proteins such as casein and gelatin; aqueous natural polymeric compounds like sucrose such as oxidized starches and starches of ester compounds; aqueous synthetic polymeric compounds such as polyvinyl alcohols, modified polyvinyl alcohols, polyvinyl pyrrolidone, polyacrylic acid, sodium polyacrylate, acrylic acid amide-acrylate copolymer, acrylic acid amide-acrylate-methacrylic acid ternary copolymer, alkaline salt of styrene-maleic anhydride copolymer, polyacrylamide and styrene-maleic anhydride copolymer; aqueous adhesive resins such as alkaline salts of ethylene-maleic anhydride copolymer; latexes such as polyvinyl acetate, polyurethane, polyacrylic acid, styrene-butadiene copolymer, acrylonitrile-butadiene copolymer, methyl acrylate-butadiene copolymer, acrylonitrile-butadiene-acrylic acid copolymer and ethylene-vinyl acetate copolymer.

In addition, a sensitizer may be comprised in order to increase the sensitivity of the heat-sensitive recording layer. Examples thereof include waxes such as N-hydroxymethylstearic amide, stearic amide, palmitic amide; naphthol derivatives such as 2-benzyloxynaphthalene; biphenyl derivatives such as p-benzylbiphenyl and 4-aryloxybiphenyh polyether compounds such as 1,2-bis(3-methylphenoxy)ethane, 2,2'-bis(4-methoxypehnoxy)diethylether, bis(4-methoxyphenyl)ether; derivatives of diester carbonates or oxalates such as diphenyl carbonate, dibenzyl oxalate and di(p-chlorobenzyl)oxalate.

Examples of a pigment used for the heat-sensitive recording layer include diatom earth, talc, kaolin, calcined kaolin, calcium carbonate, magnesium carbonate, titanium oxide, zinc oxide, silicon oxide, aluminum hydroxide and urine-formalin resin.

The heat-sensitive recording layer of the present invention may comprise a commonly known filler. Examples thereof include inorganic pigments such as calcium carbonate, zinc oxide, aluminum oxide, titanium dioxide, silica, aluminum hydroxide, barium sulfate, talc, kaolin, alumina and clay, and commonly known organic pigments; fillers are not limited to these. Acidic pigments (pigments that show acidity in aqueous solution) of silica, kaolin and alumina are preferable in terms of water resistance (a property that pigments are resistant to water and do not fall off their adherend), and silica is more preferable in terms of color optical density.

It is reasonable to install an intermediate layer under the heat-sensitive recording layer, i.e. over the support, for the purpose of improving the heat-sensitive color properties and preventing the tailing after printing, or to install a protective layer over the heat-sensitive recording layer for the purpose of preventing color fouling and providing water resistance.

The protective layer formed over the heat-sensitive recording layer preferably comprises a polyvinyl alcohol (hereinafter referred to as PVA) comprising a reactive carbonyl group, which may be manufactured by heretofore known methods such as a saponification of a polymer obtained from copolymerization of a vinyl monomer comprising a reactive carbonyl group with a fatty acid vinyl ester. Examples of a vinyl monomer comprising a reactive carbonyl group include a group with ester residue and a group comprising an acetone group. Among these, a vinyl monomer comprising a diacetone group is preferable with specific examples being diacetone acrylamide and meta-diacetone acrylamide. Examples of a fatty acid vinyl ester include vinyl formate, vinyl acetate and vinyl propionate; among these, vinyl acetate is preferable. The PVA comprising a reactive carbonyl group used in the present invention may be a copolymer with other copolymerizable vinyl monomers. Examples of these copolymerizable vinyl monomers include acrylic ester, butadiene, ethylene, propylene, acrylic acid, methacrylic acid, maleic acid, maleic anhydride and itaconic acid. The content of the reactive carbonyl group in the PVA comprising a reactive carbonyl group used in the present invention is 0.5 % by mole to 20 % by mole of the total polymer; it is preferably 2 % by mole to 10 % by mole in terms of water resistance. The water resistance is practically insufficient with the content below 2 % by mole. The water resistance does not improve further even if the content is over 10 % by mole; therefore, excessive addition is simply increasing the cost and is not economical. Moreover, the degree of polymerization of the PVA comprising a reactive carbonyl group is preferably 300 to 3,000, and more preferably 500 to 2,200. Also, the degree of saponification is preferably 80 % or greater.

A cross-linking agent may also be added to make the resins further heat-resistant so that they do not easily get dissolved or softened by heat. A hydrazide compound is preferable as a cross-linking agent.

The hydrazine cross-linking agent used for the protective layer comprises a hydrazide group, and examples thereof include, but not limited to, carbohydrazide, oxalic dihydrazide, formic hydrazide, acetic hydrazide, malonic dihydrazide, succinic dihydrazide, adipic dihydrazide, azelaic hydrazide, sebacic dihydrazide, dodecanedioic acid dihydrazide, maleic dihydrazine, fumaric hidrazide, itaconic dihydrazide, benzoic hydrazide, glutaric dihydrazide, diglycol acid hydrazide, tartaric dihydrazide, malic dihydrazide, isophthalic hydrazide, terephthalic dihydrazide, 2,7- naphthoic dihydrazide and polyacrylic hydrazide, They may be used in combination, or these may be combined with other known cross-linking agents as long as the functionality is maintained. Among these hydrazide compounds, adipic dihydrazide is preferable in terms of water resistance and safety.

The filler used for the protective layer of the present invention is preferably basic; examples thereof include aluminum hydroxide, calcium carbonate, talc and alkaline silicate. Among these, aluminum hydroxide and calcium carbonate are preferable in terms of compatibility with thermal head (fouling); aluminum hydroxide is especially preferable for the controllability of the pH with its moderate water solubility.

Base paper which is preferably used for the support of the present invention is composed of wood pulp and loading material as its main components. Examples of wood pulp include a chemical pulp such as LBKP and NBKP; mechanical pulp such as GP, PGW, RMP, TMP, CTMP, CMP and CGP; recycled pulp such as DIP. Wood pulp may optionally comprise a commonly known pigment, binder and additives such as sizing agent, fixing agent, retention aid, cationization agent and paper strength additive, and an acidic, neutral or basic support may be manufactured with apparatus such as wire paper machine, cylinder machine and double wire machine. The base paper may go through an on-machine processing with a calender machine comprising metal rollers and synthetic resin rollers. Off-machine processing is also allowed, followed by calender processing with a machine calender or a super calender to control the evenness.

Examples of the loading material comprised in the base paper include white inorganic pigments such as light calcium carbonate, heavy calcium carbonate, kaolin, talc, calcium sulfate, barium sulfate, titanium dioxide, zinc oxide, zinc sulfide, satin white, aluminum silicate, diatom earth, calcium silicate, magnesium silicate, synthetic silica, aluminum hydroxide, alumina, lithopone, zeolite, magnesium carbonate and magnesium hydroxide; and organic pigments such as styrene plastic pigments, acrylic plastic pigments, polyethylene, microcapsules, a urea resin and a melamine resin. Examples of a sizing agent comprised in the base paper include a rosin sizing agent for acidic papermaking, a modified rosin sizing agent for neutral papermaking, alkyl ketene dimer (AKD), alkenyl succinic anhydride (ASA) and a cationic polymeric sizing agent. Furthermore, general paper such as glassine paper, art paper, coated paper and cast paper may also be used for the base paper of the present invention, and materials which are commonly used in papermaking such as loading materials, sizing agents, paper strength additives and dyes may optionally be used. It is also possible to use the following: plastic sheets such as polyethylene, polypropylene, polyethylene terephthalate and polyamide; synthetic paper and non woven fabrics of the fibers made of the above-mentioned plastics, laminated paper of which one side or both sides is laminated with a synthetic resin; metal foil; opaque sheet produced by holographically processing metal foil, paper and metal foil, bonded laminate with a synthetic resin film; mica paper and glass paper.

The heat-sensitive recording layer, intermediate layer, protective layer and heat-sensitive adhesive layer of the present invention are coated and printed on a coater generally used for paper coating such as blade coater, gravure coater, gravure offset coater, bar coater, roll coater, knife coater, air-knife coater, comma coater, U-comma coater, AKKU coater, smoothing coater, micro-gravure coater, reverse roll coater, 4-roll or 5-roll coater, dip coater, drop-curtain coater, slide coater and dye coater; or a printing machine such as flexographic press, relief duplicator, gravure printing machine and offset press. After coated or printed, the support must go through a drying process at a temperature within the range where the solid plasticizer does not melt. The means of drying include a drying method with a heat source with infrared radiation, microwave or high-frequency wave.

In addition, depending on the application, a pre-printing layer may be installed on the opposite side (right face) of the heat-sensitive adhesive layer of the heat-sensitive recording material, and as a way of sensing, eyemarks may be printed on the front side or the surface of the heat-sensitive adhesive layer. In both cases, general printing methods such as UV printing, EV printing and flexographic printing may be used.

### Examples

The present invention will be illustrated in more detail with reference to examples given below, but they are not to be construed as limiting the present invention. All percentages and parts are by mass unless otherwise indicated.

### <Example 1>

### (1) Preparation of Dye Dispersion A

A composition comprising 20 parts of 3-dibutylamino-6-methyl-N-anilinofluorane, 20 parts of a 10-% PVA solution and 60 parts of water was dispersed in a sand mill until the average particle diameter was reduced to 0.5 µm.

### (2) Preparation of Color Developer Dispersant B

A composition comprising 20 parts of 4-isopropoxy-4'-hydroxydiphenyl sulfone, 10 parts of di-(p-methylbenzyl)oxalate, 10 parts of calcium carbonate, 30 parts of a 10-% PVA solution and 30 parts of water was dispersed in a ball mill until the average particle diameter was reduced to 0.5 µm.

### (3) Preparation of Heat-Sensitive Recording Layer Coating Liquid C

A coating liquid for heat-sensitive recording layer was prepared by mixing 20 parts of the dye dispersion A, 60 parts of the color developer dispersion B, 30 parts of carboxy-denatured PVA (KL-318; solid content of 10 %; available from Kuraray Co., Ltd.) and one part of dioctyl sulfosuccinate solution (solid content of 5 %).

### (4) Preparation of Protective Layer Coating Liquid D

A coating liquid for heat-sensitive recording layer was prepared by mixing the following: 40 parts of aluminum hydroxide dispersion with a solid content of 40 %; five parts of zinc stearate dispersion with a solid content of 30 %; two parts of dioctyl sulfosuccinate solution with a solid content of 5 %; 100 parts of a 10-% PVA solution comprising diacetone group (diacetone monomer unit content of 4 %; degree of polymerization of 1600; degree of saponification of 98 %; available from Shin-Etsu Chemical Co., Ltd.); 20 parts of an adipic hydrazide solution (a cross-linking agent with a solid content of 10 %) and 133 parts of water.

### (5) Coating Heat-Sensitive Recording Layer and Protective Layer

A heat-sensitive recording layer was formed by applying followed by drying the heat-sensitive recording layer coating liquid C over SK-V, manufactured by Nippon Paper Industries Co., Ltd. (fine paper with a basis weight of 42 g/m² and a thickness of 49 µm), as a support. Then, the protective layer coating liquid was applied and dried such that the dry mass of the coating buildup is approximately 3 g/m², followed by a calender processing so that the smoothness of the surface of the protective layer is 5,000 sec.

### (6) Preparation of Solid Plasticizer Dispersion E

A solid plasticizer dispersion was prepared by uniformly mixing 80 parts of 2-(3'-t-butyl-5'-methyl-2'-hydroxyphenyl)-5-chlorobenzotriazole, 20 parts of di-(p-methylbenzyl)oxalate, 50 parts of a 10-% PVA solution, 200 parts of water followed by grinding in a ball mill until the average particle diameter was reduced to 2.0 µm.

### (7) Preparation of Heat-Sensitive Adhesive Layer Liquid F

A heat-sensitive adhesive layer solution was prepared by mixing and sufficiently agitating 100 parts of a 70-% of thermoplastic resin emulsion AP5570 (available from Showa Highpolymer Co., Ltd.; solid content of 55 %; glass transition point of -65 °C; and main component of polymer of acrylic acid and 2-ethylhexyl copolymer) with 70 parts of a tackifier Emulsion TAMANOL E-100 (available from Arakawa Chemical Industried, Ltd.; solid content of 50 %; and softening point of 145 °C), 470 parts of the solid plasticizer dispersion E and 130 parts of water.

### (8) Preparation of Adhesive Layer Liquid G

Fifteen (15) parts of a hollow particle emulsion R300 (available from Matsumoto Yushi-Seiyaku Co., Ltd.; hollow ratio of 90 %; and solid content of 33 %), 170 parts of a thermoplastic resin emulsion AP5570 (available from Showa Highpolymer Co., Ltd.; solid content of 55 %; glass transition point of 65 °C; and main component of polymer of acrylic acid and 2-ethylhexyl copolymer) and 315 parts of water were mixed and sufficiently agitated to prepare an adhesive layer liquid.

### (9) Application of Adhesive Layer Liquid and Heat-Sensitive Adhesive Layer Liquid

A heat-sensitive recording material is obtained by applying followed by drying on the opposite side of the heat-sensitive recording layer prepared in (5) first the adhesive layer liquid G such that the dry mass of its coating buildup is approximately 28 g/m² and then the heat-sensitive adhesive layer liquid F such that the dry mass of its coating buildup is approximately 10 g/m². A cross-sectional observation was conducted with an electron microscope for the film thicknesses of the heat-sensitive adhesive layer and the adhesive layer, which were found 10 µm and 28 µm, respectively.

### <Example 2>

A heat-sensitive adhesive material was obtained in the same manner as Example 1 except that the dry mass of the coating buildup of the adhesive layer was changed from 28 g/m² to 20 g/m². A cross-sectional observation was conducted with an electron microscope for the film thicknesses of the heat-sensitive adhesive layer and the adhesive layer, which were found 10 µm and 20 µm, respectively.

### <Example 3>

A heat-sensitive adhesive material was obtained in the same manner as Example 1 except that the dry mass of the coating buildup of the adhesive layer was changed from 28 g/m² to 10 g/m². A cross-sectional observation was conducted with an electron microscope for the film thicknesses of the heat-sensitive adhesive layer and the adhesive layer, which were found 10 µm and 10 µm, respectively.

### <Example 4>

A heat-sensitive adhesive material was obtained in the same manner as Example 2 except that the dry mass of the coating buildup of the heat-sensitive adhesive layer was changed from 10 g/m² to 15 g/m². A cross-sectional observation was conducted with an electron microscope for the film thicknesses of the heat-sensitive adhesive layer and the adhesive layer, which were found 15 µm and 20 µm, respectively.

### <Example 5>

A heat-sensitive adhesive material was obtained in the same manner as Example 2 except that the dry mass of the coating buildup of the heat-sensitive adhesive layer was changed from 10 g/m² to 23 g/m². A cross-sectional observation was conducted with an electron microscope for the film thicknesses of the heat-sensitive adhesive layer and the adhesive layer, which were found 23 µm and 20 µm, respectively.

### <Example 6>

A heat-sensitive adhesive material was obtained in the same manner as Example 4 except that the amount of the solid plasticizer dispersion E of the heat-sensitive adhesive layer liquid F was changed from 470 parts to 550 parts. A cross-sectional observation was conducted with an electron microscope for the film thicknesses of the heat-sensitive adhesive layer and the adhesive layer, which were found 15 µm and 20 µm, respectively.

### <Example 7>

A heat-sensitive adhesive material was obtained in the same manner as Example 4 except that the amount of the solid plasticizer dispersion E of the heat-sensitive adhesive layer liquid F was changed from 470 parts to 640 parts. A cross-sectional observation was conducted with an electron microscope for the film thicknesses of the heat-sensitive adhesive layer and the adhesive layer, which were found 15 µm and 20 µm, respectively.

### <Example 8>

A heat-sensitive adhesive material was obtained in the same manner as Example 6 except that the support was changed from SK-V manufactured by Nippon Paper Industries Co., Ltd. (fine paper with a basis weight of 42 g/m² and a thickness of 49 µm) to DSL manufactured by Nippon Paper Industries Co., Ltd. (fine paper with a basis weight of 62 g/m² and a thickness of 80 µm). A cross-sectional observation was conducted with an electron microscope for the film thicknesses of the heat-sensitive adhesive layer and the adhesive layer, which were found 15 µm and 20 µm, respectively.

### <Example 9>

A heat-sensitive adhesive material was obtained in the same manner as Example 6 except that the support was changed from SK-V manufactured by Nippon Paper Industries Co., Ltd. (fine paper with a basis weight of 42 g/m² and a thickness of 49 µm) to THK-68 manufactured by Nippon Paper Industries Co., Ltd. (fine paper with a basis weight of 79 g/m² and a thickness of 100 µm). A cross-sectional observation was conducted with an electron microscope for the film thicknesses of the heat-sensitive adhesive layer and the adhesive layer, which were found 15 µm and 20 µm, respectively.

### <Example 10>

A heat-sensitive adhesive material was obtained in the same manner as Example 6 except that the support was changed from SK-V manufactured by Nippon Paper Industries Co., Ltd. (fine paper with a basis weight of 42 g/m² and a thickness of 49 µm) to CRA120 manufactured by Chuetsu Pulp & Paper Co., Ltd. (fine paper with a basis weight of 103 g/m² and a thickness of 120 µm). A cross-sectional observation was conducted with an electron microscope for the film thicknesses of the heat-sensitive adhesive layer and the adhesive layer, which were found 15 µm and 20 µm, respectively.

### <Example 11>

A heat-sensitive adhesive material was obtained in the same manner as Example 10 except that the adhesive layer liquid G was replaced with an adhesive layer liquid H described below. A cross-sectional observation was conducted with an electron microscope for the film thicknesses of the heat-sensitive adhesive layer and the adhesive layer, which were found 15 µm and 20 µm, respectively.

### (10) Preparation of Adhesive Layer Liquid H

Sixty parts of a hollow particle emulsion R300 (available from Matsumoto Yushi-Seiyaku Co., Ltd.; hollow ratio of 90 %; solid content of 33 %), 140 parts of a thermoplastic resin emulsion AP5570 (available from Showa Highpolymer Co., Ltd.; solid content of 55 %; glass transition point of -65 °C; and polymer of acrylic acid and 2-ethylhexyl copolymer as a main component) and 300 parts of water were mixed and sufficiently agitated to prepare an adhesive layer liquid.

### <Comparative Example 1>

A heat-sensitive adhesive material was obtained in the same manner as Example 1 except that the dry mass of the coating buildup of the adhesive layer was changed from 28 g/m² to 38 g/m². A cross-sectional observation was conducted with an electron microscope for the film thicknesses of the heat-sensitive adhesive layer and the adhesive layer, which were found 10 µm and 38 µm, respectively.

### <Comparative Example 2>

A heat-sensitive adhesive material was obtained in the same manner as Comparative Example 1 except that the support was changed from SK-V manufactured by Nippon Paper Industries Co., Ltd. (fine paper with a basis weight of 42 g/m² and a thickness of 49 µm) to DSL manufactured by Nippon Paper Industries Co., Ltd. (fine paper with a basis weight of 62 g/m² and a thickness of 80 µm). A cross-sectional observation was conducted with an electron microscope for the film thicknesses of the heat-sensitive adhesive layer and the adhesive layer, which were found 10 µm and 38 µm, respectively.

### <Comparative Example 3>

A heat-sensitive adhesive material was obtained in the same manner as Comparative Example 1 except that the support was changed from SK-V manufactured by Nippon Paper Industries Co., Ltd. (fine paper with a basis weight of 42 g/m² and a thickness of 49 µm) to THK-68 manufactured by Nippon Paper Industries Co., Ltd. (fine paper with a basis weight of 79 g/m² and a thickness of 100 µm). A cross-sectional observation was conducted with an electron microscope for the film thicknesses of the heat-sensitive adhesive layer and the adhesive layer, which were found 10 µm and 38 µm, respectively.

### <Comparative Example 4>

A heat-sensitive adhesive material was obtained in the same manner as Comparative Example 1 except that the amount of the solid plasticizer dispersion E of the heat-sensitive adhesive layer liquid F was changed from 470 parts to 550 parts. A cross-sectional observation was conducted with an electron microscope for the film thicknesses of the heat-sensitive adhesive layer and the adhesive layer, which were found 10 µm and 38 µm, respectively.

### <Comparative Example 5>

A heat-sensitive adhesive material was obtained in the same manner as Comparative Example 1 except that the amount of the solid plasticizer dispersion E of the heat-sensitive adhesive layer liquid F was changed from 470 parts to 640 parts. A cross-sectional observation was conducted with an electron microscope for the film thicknesses of the heat-sensitive adhesive layer and the adhesive layer, which were found 10 µm and 38 µm, respectively.

### <Comparative Example 6>

A heat-sensitive adhesive material was obtained in the same manner as Example 11 except that the adhesive layer liquid H was replaced with an adhesive layer liquid I described below. A cross-sectional observation was conducted with an electron microscope for the film thicknesses of the heat-sensitive adhesive layer and the adhesive layer, which were found 15 µm and 20 µm, respectively.

### (11) Preparation of Adhesive Layer Liquid I

A hundred twenty (120) parts of a hollow particle emulsion R300 (available from Matsumoto Yushi-Seiyaku Co., Ltd.; hollow ratio of 90 %; solid content of 33 %), 110 parts of a thermoplastic resin emulsion AP5570 (available from Showa Highpolymer Co., Ltd.; solid content of 55 %; glass transition point of -65 °C; and polymer of acrylic acid and 2-ethylhexyl copolymer as a main component) and 270 parts of water were mixed and sufficiently agitated to prepare an adhesive layer liquid.

### < Example 12>

A heat-sensitive adhesive material was obtained in the same manner as Example 8 except that the thermoplastic resin emulsion AP5570 (available from Showa Highpolymer Co., Ltd.; solid content of 55 %; glass transition point of -65 °C; and polymer of acrylic acid and 2-ethylhexyl copolymer as a main component) was replaced with an SBR Emulsion (available from Nippon A&L Inc.; solid content of 47.5 %; and glass transition point of -5 °C). A cross-sectional observation was conducted with an electron microscope for the film thicknesses of the heat-sensitive adhesive layer and the adhesive layer, which were found 15 µm and 20 µm, respectively.

The thicknesses of the support media described in Examples and Comparative Examples were the average of five repetitive measurements based on JIS P-8118 test method. Also, the basic weights of the support media were the average of five repetitive measurements based on JIS P-8124 test method.

The heat-sensitive recording materials obtained from Examples and Comparative Examples were evaluated based on the methods described below.

### <Clark Stiffness>

For each of the heat-sensitive recording materials prepared in Examples and Comparative Examples, five measurements of Clark stiffness in the longitudinal direction were taken based on JIS P-8143, and the average value was recorded.

### <Coefficient of Static Friction>

A heat-sensitive recording material prepared in Examples and Comparative Examples was pasted on a smooth aluminum plate in a longitudinal direction such that the heat-sensitive adhesive layer was the right side. A PET film was pasted without wrinkling on a weight with a width of 5 cm, length of 7 cm and a mass of 320 g, and the weight was placed so that it overlaps with the surface of the heat-sensitive recording material. The aluminum plate was slowly tilted, and an angle θ at which the weight was about to slide was recorded. The procedure was repeated five times, and the tangent of the average value of the angle θ was recorded as a coefficient of static friction.

### < Method of Activation>

The heat-sensitive recording materials prepared in Examples and Comparative Examples were cut into labels, each of which has a width of 4 cm and a length of 10 cm. The labels were activated by contacting the surface of the heat-sensitive adhesive layer with a thermal head at a temperature of 22 °C and a relative humidity of 65 % and under the following conditions:
Thermal head (TH-0976SP manufactured by TEC Co.): 8 dot/mm
Resistance: 500 Ω
Activation energy: 26.0 mJ/mm²
Printing speed: 100 mm/sec
Platen pressure (a silicone platen with a diameter of 1 cm): 6 kgf/line

### <Adhesion Measurement>

The heat-sensitive recording label activated with the above-mentioned method were attached by hand on a polyethylene plate and a cardboard with the activated surface of the labels facing their adherends within five seconds of activation and pressurized with a stroke of a 2-kg rubber roller. The labels were peeled off with a peel angle of 180 ° and a peel rate of 300 mm/min two minutes after attachment. The resistance to peeling off was numerically expressed in a unit of gf/40 mm.

### <Compatibility Test-Cutting Test Method>

A printer shown in FIG. 1, capable of printing, cutting and activating in a continuous action, was prepared. For each of the heat-sensitive recording materials of Examples and Comparative Examples in the form of a roll with a width of 4 cm, a thousand pieces were continuously cut with the cutting parts 40 and 41 in FIG. 1 at a cutting rate of 60 cuts per minute after printing. The number of wrong cuts was counted. Here, a wrong cut is defined as a condition in which the pieces of paper before and after cutting were not completely separated.

### <Compatibility Test-Flexibility Test Method>

The heat-sensitive recording material of Examples and Comparative Examples was arranged in the form of a roll with a width of 4 cm and placed in the printer capable of the continuous action. It was determined if a label was properly flexed the flexing portion indicated by 70 in FIG. 1 after the label was printed and then cut into a length of 15 cm. The operation was repeated 100 times, and the occurrence of wrong flexures was counted. Here, a wrong flexure was confirmed when a label after being printed and cut was not inserted on a guide plate between 71 and 73 of 70 in FIG. 1.

### <Compatibility Test-Transport Test Method>

The heat-sensitive recording material of Examples and Comparative Examples was arranged in the form of a roll with a width of 4 cm and placed in the printer capable of the continuous action. It was determined if a label was properly inserted and delivered to lead-in rolls indicated by 54 of 50 in FIG. 1 after the label was printed and then cut into a length of 15 cm. The operation was repeated 100 times, and the occurrence of wrong insertion/delivery was counted. Here, a wrong insertion/delivery was confirmed when, after printed and cut, a label halted at, instead of smoothly passing through, the portion between the lead-in rolls indicated by 54 of 50 in FIG. 1 and the rollers idled, or when the printer was jammed with a label not being inserted between the rollers.

All the above-mentioned test methods were conducted at a temperature of 22 °C and a relative humidity of 65 %.

The results are shown in Table 1.

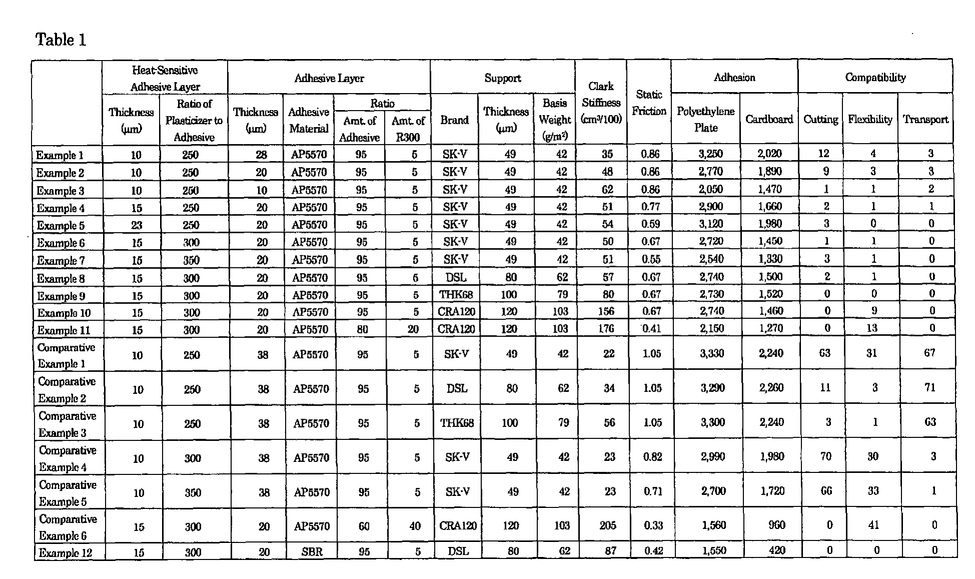

As described in Examples and Comparative Examples above, the heat-sensitive recording material of the present invention comprises adhesive strength applicable to a variety of adherends with mirror to rough surfaces, which has been a major issue, as well as improved compatibility with a novel thermal printer such as a printer described in JP-A No. 2003-315265.

## Claims

1. A heat-sensitive adhesive material comprising: a support, an adhesive layer, and a heat-sensitive adhesive layer on one surface of the support and layered in the order from the support,
wherein the heat-sensitive adhesive material has a Clark stiffness of 30 cm³/100 to 180 cm³/100, and
the heat-sensitive adhesive material has a coefficient of static friction of 0.90 or less, expressed by tan θ of angle θ, which is an average of five measurements of an angle a substrate makes with a horizontal plane and at which a weight is about to slide, wherein the heat-sensitive adhesive material is pasted on the smooth substrate in a longitudinal direction such that the heat-sensitive adhesive layer is the front face, the weight with a width of 5 cm and a length of 7 cm, which weighs 320 g and has a polyethylene terephthalate film attached to its bottom surface, is left at rest on the surface of the heat-sensitive adhesive layer of the heat-sensitive adhesive material, and the substrate is tilted
wherein the adhesive layer has a thickness of 5 µm to 30 µm ;
wherein the heat-sensitive adhesive layer comprises a thermoplastic resin, a solid plasticizer and a tackifier, and the content of the solid plasticizer is such that 100 parts to 400 parts by mass of the solid plasticizer to 100 parts by mass of the thermoplastic resin;
and wherein the heat-sensitive adhesive layer has a thickness of 5 µm to 25 µm.

2. The heat-sensitive adhesive material according to claim 1, wherein the adhesive layer comprises an adhesive compound and a hollow particle, and the glass transition point of the adhesive compound has a glass transition point of -10 °C or below.

3. The heat-sensitive adhesive material according to any one of claims 1 to 2, wherein the content of the hollow particle in the adhesive layer is 3 % by mass to 25 % by mass.

4. The heat-sensitive adhesive material according to any one of claims 1 to 3, wherein the support has a thickness of 45 µm to 135 µm, and a basis weight of 40 g/m² to 110 g/m².

5. The heat-sensitive adhesive material according to any one of claims 1 to 4, wherein the heat-sensitive adhesive material comprises a heat-sensitive recording layer on the surface of the support which is the opposite side where the heat-sensitive adhesive layer is comprised.

6. The heat-sensitive adhesive material according to any one of claims 1 to 5, wherein the heat-sensitive adhesive material is in the form of a roll.

7. The heat-sensitive adhesive material according to claim 6, wherein the heat-sensitive adhesive material in the form of a roll is coreless.

8. The heat-sensitive adhesive layer according to any one of claims 6 to 7, wherein at least a portion of the outer edge of the heat-sensitive adhesive material in the form of a roll is thermally activated as a tack to the roll.

## Patentansprüche

1. Wärmeempfindliches Klebmaterial umfassend: einen Träger, eine Klebschicht und eine wärmeempfindliche Klebschicht auf einer Oberfläche des Trägers und in der Reihenfolge von dem Träger geschichtet,
wobei das wärmeempfindliche Klebmaterial eine Clark-Steifigkeit von 30 cm³/100 bis 180 cm³/100 aufweist, und
das wärmeempfindliche Klebmaterial einen statischen Reibungskoeffizienten von 0,90 oder weniger aufweist, ausgedrückt durch tan θ des Winkels 0, welcher einen Durchschnitt von fünf Messungen eines Winkels darstellt, den ein Substrat mit einer horizontalen Ebene bildet und bei dem ein Gewicht im Begriff ist zu rutschen, wobei das wärmeempfindliche Klebmaterial auf dem glatten Substrat in Längsrichtung geklebt wird, so dass die wärmeempfindliche Klebschicht die Vorderseite ist, das Gewicht mit einer Breite von 5 cm und einer Länge von 7 cm, das 320 g wiegt und eine Polyethylenterephthalat-Folie an seiner Unterseite angebracht aufweist, ruhend auf der Oberfläche der wärmeempfindlichen Klebschicht des wärmeempfindlichen Klebmaterials gelassen wird und das Substrat gekippt wird;
wobei die Klebschicht eine Dicke von 5 µm bis 30 µm aufweist;
wobei die wärmeempfindliche Klebschicht ein thermoplastisches Harz, einen festen Weichmacher und einen Klebrigmacher umfasst und der Gehalt des festen Weichmachers so ist, dass 100 bis 400 Massenteile des festen Weichmachers auf 100 Massenteile des thermoplastischen Harzes vorliegen;
und wobei die wärmeempfindliche Klebschicht eine Dicke von 5 µm bis 25 µm aufweist.

2. Wärmeempfindliches Klebmaterial nach Anspruch 1, wobei die Klebschicht eine Klebeverbindung und ein hohles Teilchen umfasst und der Glasübergangspunkt der Klebeverbindung einen Glasübergangspunkt von -10° C oder darunter aufweist.

3. Wärmeempfindliches Klebmaterial nach irgendeinem der Ansprüche 1 bis 2, wobei der Gehalt der hohlen Teilchen in der Klebschicht 3 Massen-% bis 25 Massen-% beträgt.

4. Wärmeempfindliches Klebmaterial nach irgendeinem der Ansprüche 1 bis 3, wobei der Träger eine Dicke von 45 µm bis 135 µm und ein Flächengewicht von 40 g/m² bis 110 g/m² aufweist.

5. Wärmeempfindliches Klebmaterial nach irgendeinem der Ansprüche 1 bis 4, wobei das wärmeempfindliche Klebmaterial eine wärmeempfindliche Aufzeichnungsschicht auf der Oberfläche des Trägers umfasst, die der Seite wo die wärmeempfindliche Klebschicht umfasst ist, gegenüberliegend ist.

6. Wärmeempfindliches Klebmaterial nach irgendeinem der Ansprüche 1 bis 5, wobei das wärmeempfindliche Klebmaterial in Form einer Rolle ist.

7. Wärmeempfindliches Klebmaterial nach Anspruch 6, wobei das wärmeempfindliche Klebmaterial in Form einer Rolle ohne Kern ist.

8. Wärmeempfindliches Klebmaterial nach irgendeinem der Ansprüche 6 bis 7, wobei mindestens ein Teil des äußeren Rands des wärmeempfindlichen Klebmaterials in Form einer Rolle thermisch aktiviert ist für die Klebrigkeit der Rolle.

## Revendications

1. Matériau adhésif sensible à la chaleur comprenant : un support, une couche adhésive, et une couche adhésive sensible à la chaleur sur une surface du support et disposées en couches dans cet ordre à partir du support,
dans lequel le matériau adhésif sensible à la chaleur présente une rigidité de Clark de 30 cm³/100 à 180 cm³/100, et
le matériau adhésif sensible à la chaleur présente un coefficient de frottement statique de 0,90 ou moins, exprimé par tan θ de l'angle θ, qui est une moyenne de cinq mesures d'un angle que forme un substrat avec un plan horizontal et selon lequel un poids est sur le point de glisser, où le matériau adhésif sensible à la chaleur est collé sur le substrat lisse dans une direction longitudinale de sorte que la couche adhésive sensible à la chaleur représente la face avant, le poids d'une largeur de 5 cm et d'une longueur de 7 cm, qui pèse 320 g et comporte un film en poly(téréphtalate d'éthylène) attaché à sa surface inférieure, est laissé au repos sur la surface de la couche adhésive sensible à la chaleur du matériau adhésif sensible à la chaleur, et le substrat est incliné ;
où la couche adhésive a une épaisseur de 5 µm à 30 µm ;
où la couche adhésive sensible à la chaleur comprend une résine thermoplastique, un plastifiant solide et un tackifiant, et la teneur en plastifiant solide est de l'ordre de 100 parties à 400 parties en masse du plastifiant solide pour 100 parties en masse de la résine thermoplastique ;
et où la couche adhésive sensible à la chaleur a une épaisseur de 5 µm à 25 µm.

2. Matériau adhésif sensible à la chaleur selon la revendication 1, dans lequel la couche adhésive comprend un composé adhésif et une particule creuse, et le point de transition vitreuse du composé adhésif est de -10 °C ou moins.

3. Matériau adhésif sensible à la chaleur selon l'une quelconque des revendications 1 à 2, dans lequel la teneur de la particule creuse dans la couche adhésive est de 3 % en masse à 25 % en masse.

4. Matériau adhésif sensible à la chaleur selon l'une quelconque des revendications 1 à 3, dans lequel le support a une épaisseur de 45 µm à 135 µm, et une masse surfacique de 40 g/m² à 110 g/m².

5. Matériau adhésif sensible à la chaleur selon l'une quelconque des revendications 1 à 4, dans lequel le matériau adhésif sensible à la chaleur comprend une couche d'enregistrement sensible à la chaleur sur la surface du support qui est le côté opposé où est comprise la couche adhésive sensible à la chaleur.

6. Matériau adhésif sensible à la chaleur selon l'une quelconque des revendications 1 à 5, dans lequel le matériau adhésif sensible à la chaleur se présente sous la forme d'un rouleau.

7. Matériau adhésif sensible à la chaleur selon la revendication 6, dans lequel le matériau adhésif sensible à la chaleur sous la forme d'un rouleau est sans noyau.

8. Couche adhésive sensible à la chaleur selon l'une quelconque des revendications 6 à 7, dans laquelle au moins une portion du bord externe du matériau adhésif sensible à la chaleur sous la forme d'un rouleau est activée thermiquement comme une colle sur le rouleau.
